# EUROPEAN PATENT APPLICATION

(11) **EP 4 080 633 A1**
(43) Date of publication of application: **26.10.2022**
(21) Application number: 22168754.4
(22) Date of filing: 19.04.2022
(51) Int. Cl.: H01M 10/04, H01M 50/107, H01M 50/152, H01M 50/533, H01M 50/536, H01M 50/538, H01M 50/55, H01M 50/559

(54) **A CYLINDRICAL SECONDARY CELL AND A METHOD OF ITS MANUFACTURE**

(30) Priority: 22.04.2021 SE 2150505
(71) Applicant: Northvolt AB, 112 47 Stockholm (SE)
(72) Inventor: Makino, Tetsuya, 169 73 Solna (SE); Lowe, Daniel, 722 14 Västerås (SE); Sexton, Brendan, 722 14 Västerås (SE); Shatani, Kenya, 118 49 Stockholm (SE)
(74) Representative: AWA Sweden AB

(57) **Abstract**

This disclosure presents a cylindrical secondary cell (1) comprising a cylindrical enclosure (2) comprising a first enclosure end (2a) and a second enclosure end (2b). The cell (1) further comprises an electrode roll (3) comprising first and second conductive sheets (3a, 3b) comprising electrode coatings, the electrode roll (3) being arranged in the cylindrical enclosure (2), a first terminal (4) arranged on the first enclosure end (2a) and electrically connected to the first conductive sheet (3a), and a second terminal (5) arranged on the first enclosure end (2a) and electrically connected to the second conductive sheet (3b) via the cylindrical enclosure (2). An electrode lead plate (6) that is in direct electrical contact with the second conductive sheet (3b) and with the cylindrical enclosure (2) is provided. The disclosure further presents an electrode lead plate (6) and a method of manufacturing a cylindrical secondary cell (1).

## Description

### TECHNICAL FIELD

The present disclosure generally pertains to cylindrical secondary cells and a method of manufacture of a cylindrical secondary cell. The disclosure further relates to an electrode lead plate for a cylindrical secondary cell.

### BACKGROUND

In addressing climate change, there is an increasing demand for rechargeable batteries, e.g. to enable electrification of transportation and to supplement renewable energy. Currently, lithium-ion batteries are becoming increasingly popular. They represent a type of rechargeable battery in which lithium ions move from the negative electrode to the positive electrode during discharge and back when charging.

As the demand for rechargeable batteries increases, more and more focus is being placed on production speed. To achieve an effective production of rechargeable batteries, the design of the batteries as well as their manufacturing process can be optimized.

Another aspect to consider is that the rechargeable batteries must be safe to use. Therefore, rechargeable batteries have at least one vent for releasing gas when the pressure inside the batteries rises above an allowed level.

A rechargeable battery, often referred to as a secondary battery, typically comprises one or more secondary cells electrically connected to each other.

The prior art document WO2020066055A1 discloses a unit battery with a battery case and a negative electrode lead arranged between a negative electrode and the bottom of the case

### SUMMARY

It is in view of the above considerations and others that the embodiments of the present invention have been made. The present disclosure aims at providing highly reliable secondary cells that are efficient in manufacture. The number of components is to be reduced and the assembly thereof is to be simplified.

According to a first aspect of the present disclosure, a cylindrical secondary cell is provided. The cylindrical secondary cell comprises a cylindrical enclosure comprising a first enclosure end and a second enclosure end, an electrode roll comprising first and second conductive sheets comprising electrode coatings, the electrode roll being arranged in the cylindrical enclosure, a first terminal arranged on the first enclosure end and electrically connected to the first conductive sheet, and a second terminal arranged on the first enclosure end and electrically connected to the second conductive sheet via the cylindrical enclosure.

Importantly, the cylindrical secondary cell further comprises an electrode lead plate that is in direct electrical contact with the second conductive sheet and in direct electrical contact with the cylindrical enclosure. The electrode lead plate is in direct electrical and physical contact with the second conductive sheet and in direct electrical and physical contact with the cylindrical enclosure.

By the electrode lead plate directly electrically contacting the second conductive sheet and the cylindrical enclosure, the second conductive sheet and the cylindrical enclosure are efficiently and reliably contacted to one another. The electrode lead plate may be one single component electrically coupled between the second conductive sheet and the cylindrical enclosure. In other words, the electrode lead plate may be the only component electrically coupled between the second conductive sheet and the cylindrical enclosure. Thereby, the number of components of the cylindrical secondary cell is kept low, and its manufacture involves few steps.

Typically, the cylindrical enclosure comprises a longitudinal side wall that extends from the first enclosure end to the second enclosure end, and the electrode lead plate is in direct electrical contact with the longitudinal side wall of the cylindrical enclosure. The cylindrical secondary cell may be a tabless cell. Typically, the electrode lead plate is in direct electrical contact with a non-coated end section of the second conductive sheet.

The cylindrical secondary cell is of a type that has both the positive terminal and the negative terminal at one end of the cylindrical secondary cell. The terminals are electrically connected to a respective one of the first and second conductive sheets. One of the terminals and one of the conductive sheets may be electrically connected to the cylindrical enclosure. Thereby, the cylindrical enclosure forms a current path from the electrode roll to that terminal and in fact the cylindrical enclosure may be utilized as a terminal.

A cylindrical secondary cell having both terminals at one end may bring advantages as regards electrically connecting the cylindrical secondary cell to a load. Conductors electrically connecting the terminals to the load may be positioned on the same end, the terminal end, of the cylindrical secondary cell. The opposite end, the electrolyte-filling end, of the cylindrical secondary cell may be dedicated to electrolyte filling and gas venting. An overpressure may be generated within the cylindrical secondary cell during operation, in particular upon malfunction of the cylindrical secondary cell or of the load connected to the cell. Such malfunction may require a release of gas and/or electrolyte out of the cylindrical secondary cell, and it may be advantageous to direct the released gas and/or electrolyte away from the conductors.

For example, a number of cylindrical secondary cells may be arranged at a low position in an electric vehicle. The cylindrical secondary cells may be arranged with the terminal ends directed upwards and the electrolyte-filling ends directed downwards. Upon malfunction, for example resulting from a faulty electric vehicle charger or a faulty cylindrical secondary cell, a release of gas and/or electrolyte from the electrolyte-filling end(s) will be advantageously directed downwards towards the ground beneath the vehicle.

The electrode lead plate may be attached to the second conductive sheet. In this way, the electrode lead plate may mechanically hold the second conductive sheet. The electrode lead plate may be soldered or welded to the second conductive sheet. The electrode lead plate may be laser welded to the second conductive sheet.

The electrode lead plate may be attached to the cylindrical enclosure. In this way, the cylindrical enclosure may mechanically hold the electrode lead plate. If the electrode lead plate is attached to the second conductive sheet, the cylindrical enclosure may mechanically hold also the second conductive sheet. The electrode lead plate may be soldered or welded to the cylindrical enclosure. The electrode lead plate may be laser welded, ultrasonic seam welded, ultrasonic torsional welded or resistance welded to the cylindrical enclosure. Attaching the electrode lead plate to the cylindrical enclosure by welding may be advantageous as is may allow precise longitudinal positioning of the electrode lead plate within the cylindrical enclosure. The electrode lead plate may in addition, or solely, be attached to the cylindrical enclosure by plastic deformation of the cylindrical enclosure, or of the cylindrical enclosure and the electrode lead plate. Typically, electrode lead plate is attached to the longitudinal side wall of the cylindrical enclosure.

The electrode lead plate may be provided with slits that extend radially from an outer edge thereof in a direction towards the center of the electrode lead plate. Such slits may hinder buckling of the electrode lead plate when the electrode lead plate is attached to the cylindrical enclosure by plastic deformation of the cylindrical enclosure and of the electrode lead plate. The length of the slits may correspond to 10 to 30 percent the radius of the electrode lead plate.

The electrode lead plate may be crown-shaped. Such a shape may be beneficial for welding, e.g. laser spot welding, the electrode lead plate to the cylindrical enclosure. The crown-shape may in addition reduce buckling, as described in the above paragraph.

The electrode lead plate may comprise an inner contact region that is in direct electrical contact with the second conductive sheet and an outer contact region that is in direct electrical contact with the cylindrical enclosure. Such an electrode lead plate may easily be adapted to the second conductive sheet and to the cylindrical enclosure both in terms of electric power requirements and dimensions.

The electrode lead plate may be dimensioned to be in direct electrical contact with the second conductive sheet over essentially the entire end area or of the electrode roll. The electrode lead plate may be dimensioned to be in direct electrical contact with the longitudinal side wall of the cylindrical enclosure. The electrode lead plate may be dimensioned to be in direct electrical contact along the entire circumference of the longitudinal side wall of the cylindrical enclosure.

The second enclosure end may comprise a filling opening for filling the cylindrical enclosure with electrolyte. Thus, the cylindrical secondary cell may have a terminal end and an opposite electrolyte-filling end, as discussed above.

The cylindrical secondary cell may comprise a lid sealing the second enclosure end. Thus, the lid is a separate component and does not form part of the cylindrical enclosure or of the electrode lead plate. The lid may be electrically insulated from the cylindrical enclosure. The lid may comprise the filling opening, the second enclosure end forming the electrolyte-filling end. The lid may be electrically insulated from the electrode lead plate.

The electrode lead plate may be arranged at a separating distance from the lid. By separating distance is meant that the distance between the lid and the electrode lead plate is sufficient to electrically insulate the two from each other. A gasket may be arranged between the lid and the cylindrical enclosure. The gasket may serve to electrically insulate the lid from the cylindrical enclosure, and to provide a tight seal between the lid and the cylindrical enclosure.

The electrode lead plate may consist of a disc-shaped element having a first end surface forming the inner contact region and a circumference forming the outer contact region. The inner contact region may be of essentially the same size as the end area of the electrode roll. The circumference of the electrode lead plate may be of essentially the same size as the inner longitudinal side wall of the cylindrical enclosure.

The disc-shaped element may comprise a flange portion forming the outer contact region. The flange portion may extend from the outer circumference of the disc-shaped element normal to the plane of the disc-shaped element. The flange portion may thus extend in parallel with the longitudinal direction of the cylindrical enclosure. Such a flange portion may facilitate and strengthen the attachment of the electrode lead plate to the cylindrical enclosure.

According to a second aspect of the present disclosure, a method of manufacturing a cylindrical secondary cell is provided. Such a cylindrical secondary cell comprises a cylindrical enclosure comprising a first enclosure end provided with first and second terminals and a second enclosure end, an electrode roll comprising a conductive sheet, and an electrode lead plate. The method comprises arranging the electrode lead plate in direct electrical contact with the conductive sheet and with the cylindrical enclosure. The method may comprise arranging the electrode lead plate in direct electrical contact with the longitudinal side wall of the cylindrical enclosure.

By arranging the electrode lead plate in direct electrical contact with the conductive sheet and with the cylindrical enclosure, no additional steps are required for electrically connecting the conductive sheet and the cylindrical enclosure.

The method may comprise attaching the electrode lead plate to the cylindrical enclosure by welding and/or by plastically deforming the cylindrical enclosure.

The method of manufacture may be used to produce a cylindrical secondary cell comprising the features described above. For example, the method may involve welding the electrode lead plate to the conductive sheet and/or welding the electrode lead plate to the cylindrical enclosure. Further, the method may involve attaching the lid to the second enclosure end, e.g. by crimping or seaming. The remaining corresponding steps of the method are foreseeable by persons skilled in the art and will not be mentioned in detail.

By the electrode lead plate directly electrically contacting the second conductive sheet and the cylindrical enclosure, the second conductive sheet and the cylindrical enclosure are efficiently and reliable contacted to one another. The electrode lead plate may be one single component electrically coupled between the second conductive sheet and the cylindrical enclosure. In other words, the electrode lead plate may be the only component electrically coupled between the second conductive sheet and the cylindrical enclosure. Thereby, the number of components of the cylindrical secondary cell is kept low, and its manufacture involves few steps.

According to a third aspect of the present disclosure, an electrode lead plate for a cylindrical secondary cell is provided. Such a cylindrical secondary cell comprises a cylindrical enclosure comprising a first enclosure end provided with first and second terminals and a second enclosure end, and an electrode roll comprising a conductive sheet and arranged in the cylindrical enclosure. The electrode lead plate comprises an inner contact region configured to be arranged in direct electrical contact with the conductive sheet and an outer contact region in the form of a flange portion configured to be arranged in direct electrical contact with the cylindrical enclosure.

The outer contact region may be configured to be arranged in direct electrical contact with a longitudinal side wall of the cylindrical enclosure. The electrode lead plate may be oriented with the flange portion directed away from the electrode roll.

The electrode lead plate may comprise a number of through holes to allow flow of electrolyte through the electrode lead plate.

The electrode lead plate may comprise the features of the electrode lead plate of the cylindrical secondary described above. For example, the inner contact region may be of essentially the same size as the end area of the electrode roll. Further, the circumference of the electrode lead plate may be of essentially the same size as the inner longitudinal side wall of the cylindrical enclosure.

### BRIEF DESCRIPTION OF THE DRAWINGS

The embodiments disclosed herein are illustrated by way of example, and by not by way of limitation, in the figures of the accompanying drawings. Like reference numerals refer to corresponding parts throughout the drawings, in which
- Figure 1: schematically illustrates a first embodiment of a cylindrical secondary cell in cross-section,
- Figure 2: illustrates a first embodiment of an electrode lead plate for a cylindrical secondary cell, such as the cylindrical secondary cell of figure 1,
- Figure 3: schematically illustrates a second embodiment of a cylindrical secondary cell in cross-section, and
- Figure 4: illustrates a second embodiment of an electrode lead plate for a cylindrical secondary cell, such as the cylindrical secondary cell of figure 3,
- Figure 5: shows a third embodiment of a cylindrical secondary cell in cross-section,
- Figures 6 a-f: illustrate further embodiments of an electrode lead plate,
- Figure 7: shows an electrode lead plate with a first set of weld lines,
- Figure 8: shows the electrode lead plate of figure 7 with a first and a second set of weld lines, and
- Figure 9: an example of an electrolyte hole pattern.

### DETAILED DESCRIPTION

Embodiments of the present disclosure will now be described more fully hereinafter. The invention may, however, be embodied in many different forms and should not be construed as limited to the embodiments set forth herein; rather, these embodiments are provided by way of example so that this disclosure will be thorough and complete, and will fully convey the scope of the invention to those persons skilled in the art.

The present disclosure relates to a cylindrical secondary cell 1 of a type that has both a positive terminal 4 and a negative terminal 5 at one and the same end of the cylindrical secondary cell 1.

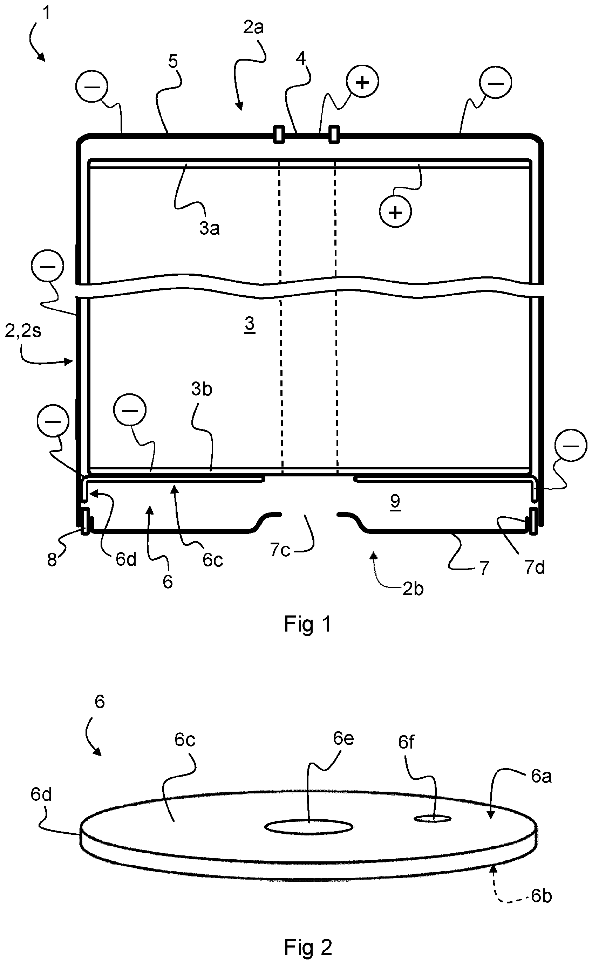

Figure 1 schematically illustrates a first embodiment of the cylindrical secondary cell 1 (hereinafter referred to as cell) that comprises a cylindrical enclosure 2 with a first enclosure end 2a (the top end in figure 1) and an opposite second enclosure end 2b (the bottom end in figure 1). Inside the cylindrical enclosure 2, an electrode roll 3 is contained. Another term for cylindrical enclosure is can.

In the embodiments disclosed herein (see figures 1, 3 and 5), the cylindrical enclosure 2 comprises a longitudinal lateral wall or longitudinal side wall 2s that extends from the first enclosure end 2a to the second enclosure end 2b. The first enclosure end 2a is closed by a top wall formed in one-piece with the side wall 2s. The second enclosure end 2b is closed by a separate lid 7 (as is described below).

The electrode roll 3 (may be termed electrodes roll) comprises a first and a second conductive sheet 3a, 3b and separating means (not shown). The separating means may alternatively be termed separator. The sheets 3a, 3b are coated with electrode coatings and on assembly of the cell 1 the cylindrical enclosure 2 is filled with an electrolyte. The coatings of the conductive sheets 3a, 3b thereinafter acts as cathode and anode, respectively. The cathode, anode and electrolyte provide electrochemical energy storage. This principle is known per se, and the electrode roll 3 is commonly referred to as a jelly roll.

As is illustrated in figure 1, the sheets 3a, 3b of the electrode roll 3 are axially offset in relation to one another, and each comprises an end section that is not coated with electrode coating. At one end of the electrode roll 3 the first conductive sheet 3a will thus protrude axially from the electrode roll 3 and at the opposite end of the electrode roll 3, the second conductive sheet 3b will protrude axially from the electrode roll 3. In figure 1, the upper end of the first conductive sheet 3a is not coated with electrode coating and the lower end of the second conductive sheet 3b is not coated with electrode coatings. In this way, the respective ends of the electrode roll 3 may be efficiently electrically connected to a respective assigned terminal 4, 5 of the cell 1. This design is known per se and commonly referred to as a tabless cell.

In this disclosure, only the connection between one of the conductive sheets 3a, 3b and one of the terminals 4, 5 will be discussed in detail. The other one of the conductive sheets 3a, 3b is electrically connected to the other one of the terminals 4, 5 in a manner not discussed in detail herein.

As is illustrated in figure 1, an electrode lead plate 6 is arranged at the lower end of the electrode roll 3. The electrode lead plate 6 is in direct electrical contact with the second conductive sheet 3b, more precisely with the non-coated end section of the second conductive sheet 3b. The electrode lead plate 6 may be attached, for example welded, for example laser welded, to the second conductive sheet 3b.

As is further illustrated, the electrode lead plate 6 is also in direct electrical contact with the cylindrical enclosure 2, more precisely with the longitudinal side wall 2s of the cylindrical enclosure 2. The electrode lead plate 6 may be attached, for example welded, to the cylindrical enclosure 2. The electrode lead plate 6 may be welded to the cylindrical enclosure 2 for example by laser welding, ultrasonic seam welding, ultrasonic torsional welding or resistance welding.

Thus, the electrode lead plate 6 efficiently electrically connects the second conductive sheet 3b and the cylindrical enclosure 2, such that they are at the same electric potential. Furthermore, the electrode lead plate 6 may mechanically attach the second conductive sheet 3b to the cylindrical enclosure 2, more precisely to the longitudinal side wall 2s thereof. In other words, the second conductive sheet 3b may be held in place in the cylindrical enclosure 2 by means of the electrode lead plate 6. Thus, the electrode roll 3 may be at least partially suspended in the cylindrical enclosure 2 by the electrode lead plate 6.

Turning now to figure 2 that discloses the electrode lead plate 6 of the first embodiment. The electrode lead plate 6 consists of a disc-shaped element having a first end surface 6a and an opposite second end surface 6b. In the figures, the first end surface 6a is the top end surface and the second end surface 6b is the bottom end surface. As is understood from figure 2 in connection with figure 1, a portion of the first end surface 6a forms an inner contact region 6c that is configured to be arranged in direct electrical contact with the conductive sheet 3b. Further, the circumference of the disc-shaped element forms an outer contact region 6d that is configured to be arranged in direct electrical contact with the cylindrical enclosure 2. More precisely, the outer contact region 6d is configured to be arranged in direct electrical contact with the inner side wall 2s surface of the cylindrical enclosure 2.

As is clear from figures 1 to 5, the inner contact region 6c may be dimensioned to be arranged in direct electrical contact with the second conductive sheet 3b that protrudes from the electrode roll 3 over the entire end area of the electrode roll 3. The outer contact region 6d may be dimensioned to be arranged in direct electrical contact with the inside of the longitudinal side wall 2s of the cylindrical enclosure 2, typically in direct electrical contact along the entire inner circumference of the longitudinal side wall 2s.

As is shown in figures 1 and 2, the outer contact region 6d may be formed by a flange portion. The flange portion illustrated herein extends from the outer circumference of the disc-shaped element normal to the plane of the disc-shaped element. The illustrated flange portion thus extends in parallel with the longitudinal direction of the cylindrical enclosure 2. The length of the flange portion may be adapted e.g. to suit a certain welding technique and in accordance with mechanical strength requirements. It is believed that a relatively large extension of the flange portion may be beneficial to reduce electrical resistance and thus thermal losses within the cell 1. For example, the extension of the flange portion may correspond to 3 to 6, or 3.5 to 5.5, percent of the extension of the electrode lead plate. In the first embodiment, the axial length of the flange portion may be 3 to 6, or 3.5 to 5.5, percent of the diameter of the disc-shaped element of the electrode lead plate 6.

The flange is, for example, made by stamping a flat disc-shaped so that the edge is bent.

For reasons of manufacture, the electrode lead plate 6 may be oriented with the flange directed away from the electrode roll 3, i.e. towards the second enclosure end 2b. Thereby the flange will not be radially arranged in-between the electrode roll 3 and the cylindrical enclosure 2, leaving more space for the electrode roll 3.

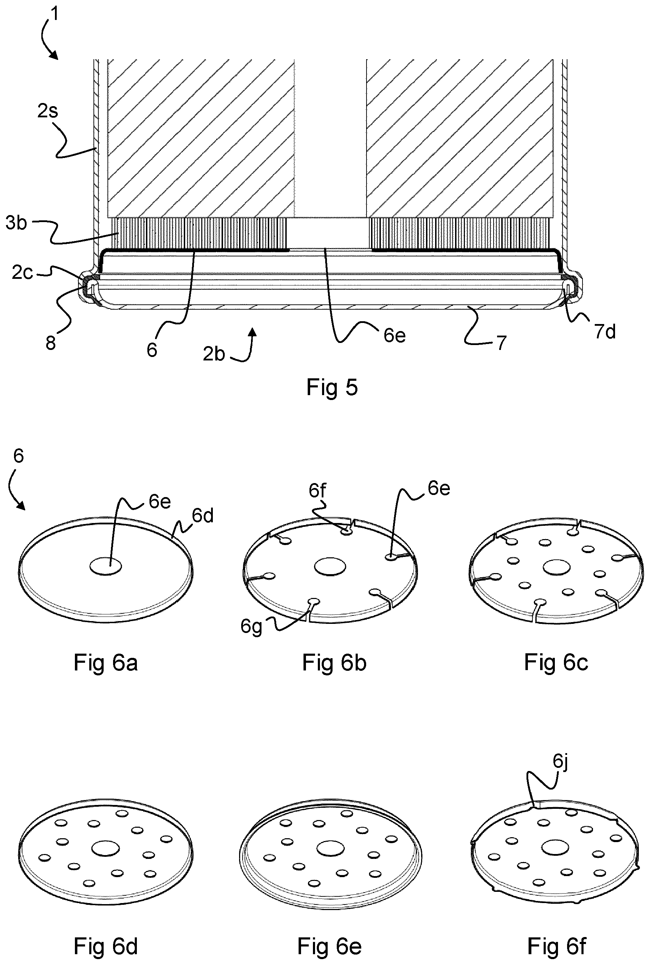

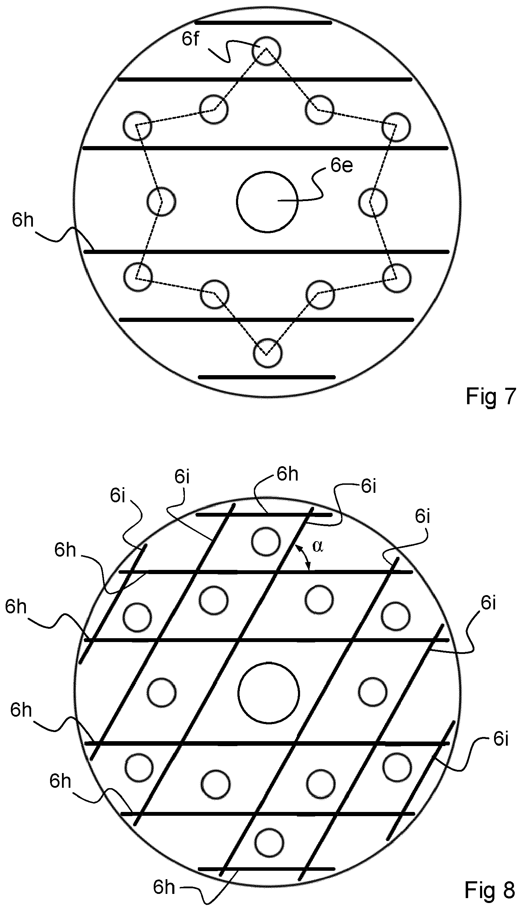

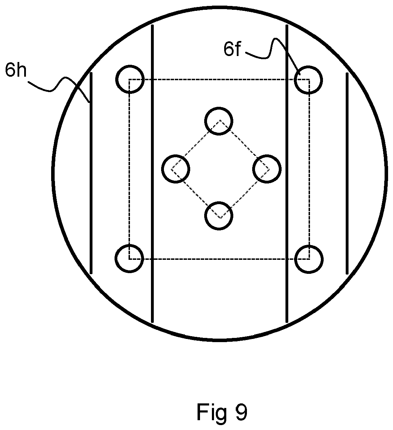

The electrode lead plate 6 may comprise a number of through holes 6e, 6f to allow flow of electrolyte through the electrode lead plate 6. The through holes 6e, 6f allow electrolyte to flow through the electrode lead plate 6 to fill the cylindrical enclosure 2 and to be distributed within the cylindrical enclosure 2. In figures 1 and 2 is shown a central electrolyte hole 6e that primarily is provided for filling the cylindrical enclosure 2, and in figure 2 is also shown a distribution electrolyte hole 6f that is provided for distributing the electrolyte within the cylindrical enclosure 2. Typically, there is a number of distribution electrolyte holes 6f but only one such hole is illustrated in figure 2. Figures 6b and 7 show two examples of distribution electrolyte holes 6f patterns. A further example is shown in figure 9.

As is shown in figure 1, the second enclosure end 2b may comprise a filling opening 7c for filling the cylindrical enclosure 2 with electrolyte. After filling, the filling opening 7c may be closed e.g. by a blind rivet (not shown) or by a ball (not shown) welded to the rim of the filling opening 7c. The filling opening 7c may be arranged in a lid 7 that is attachable to the cylindrical enclosure 2 at the second enclosure end 2b. The filling opening 7c may be aligned with the central electrolyte hole 6e of the electrode lead plate 6.

In the embodiment of figure 1, the lid 7 is electrically insulated from the cylindrical enclosure 2 by a gasket 8 that is arranged between the lid 7 and the inner wall surface of the cylindrical enclosure 2. The lid 7 may be a disc-shaped element of a dimension adapted to the cylindrical enclosure 2, such that the lid 7 may be introduced into the cylindrical enclosure at the second enclosure end 2b.

The lid 7 and the cylindrical enclosure 2 may be adapted such that the lid 7 may be attached to the cylindrical enclosure 2 by plastic deformation of the cylindrical enclosure 2, or by plastic deformation of the cylindrical enclosure 2 and the lid 7.g To facilitate the attachment of the lid 7 to the cylindrical enclosure 2, for example by crimping or seaming, the lid 7 may include a lid flange portion 7d. The lid flange portion 7d may extend from the outer circumference of the lid 7 normal to the plane of the lid 7. The lid flange portion 7d may extend in parallel with the longitudinal direction of the cylindrical enclosure 2. The lid flange 7d may be directed towards the electrode roll 3. The gasket 8 may be shaped such that it may be arranged in-between the lid 7 and the cylindrical enclosure 2 after attachment of the lid 7 to the cylindrical enclosure 2. For example, the gasket 8 may be cylindrical, thin-walled and have a length in the axial direction that exceeds the length of the lid flange 7d (as illustrated in figure 1).

The lid 7 may comprise a vent arrangement (not shown) for release of gas and/or electrolyte out of the cell 1 in the event of an overpressure within the cylindrical enclosure 2. The vent arrangement may be configured to open or rupture at a threshold pressure within the cylindrical enclosure 2. The vent arrangement may be incorporated in a re-closable valve means arranged in the filling opening 7c, or may be formed by a weakened portion of the lid 7 itself. For example, the lid 7 may be provided with a weakening notch running around the lid 7, close to the outer circumference of the lid 7.

As is shown in figure 1, the electrode lead plate 6 may be attached to the longitudinal side wall 2s of the cylindrical enclosure 2 at a distance from the second enclosure end 2b, i.e. at a distance along the axial direction of the cell 1. Thereby there is room for the lid to be attached to the second enclosure end 2b such that, after assembly of the cell 1, the electrode lead plate 6 may be positioned between the electrode roll 3 and the lid 7. Further, the electrode lead plate 6 may be attached to the cylindrical enclosure 2 at a sufficient distance from the second enclosure end 2b such that an electrolyte flow chamber 9 is created between the electrode lead plate 6 and the lid 7.

The electrolyte flow chamber 9 may be beneficial for distributing the electrolyte within the cylindrical enclosure 2. As is apprehended from figure 1, during filling of the cylindrical enclosure 2 the electrolyte may enter the electrolyte flow chamber 9 from the filling opening 7c or from one of the distribution electrolyte holes 6f. From the electrolyte flow chamber 9, the electrolyte has access to all the distribution electrolyte holes 6f. The electrolyte flow chamber 9 may be referred to as the electrolyte manifold chamber.

The coating on the first conductive sheet 3a of the electrode roll 3 may form a cathode material and the coating on the second conductive 3b sheet may form the anode material. Typically, the conductive sheet of the cathode of a secondary cell comprises aluminium (aluminum in US English) and thus the first conductive sheet 3a may be made of aluminium. Typically, conductive sheet of the anode side of a secondary cell comprises copper or steel and thus the second conductive sheet 3b may be of copper or steel. As regards the metals listed here, alloys thereof are included. For example, copper is to be construed as including copper alloys, i.e. alloys mainly comprising copper. Similarly, steel is to be construed as including nickel-plated steel.

As it may be advantageous to use the same metal throughout a current path, especially within a battery that contains an electrolyte, the electrode lead plate 6 and the cylindrical enclosure 2 are preferably of the same metal as the second conductive sheet 3b. The cylindrical enclosure 2 may thus be made from copper or steel. This brings the advantage that the cylindrical enclosure 2 may be designed with a thin wall, as compared to a cylindrical enclosure of aluminium as copper and steel have higher tensile strengths than aluminum. Another advantage is that copper and steel both have higher melting points than aluminium, which may increase the safety of the cell 1.

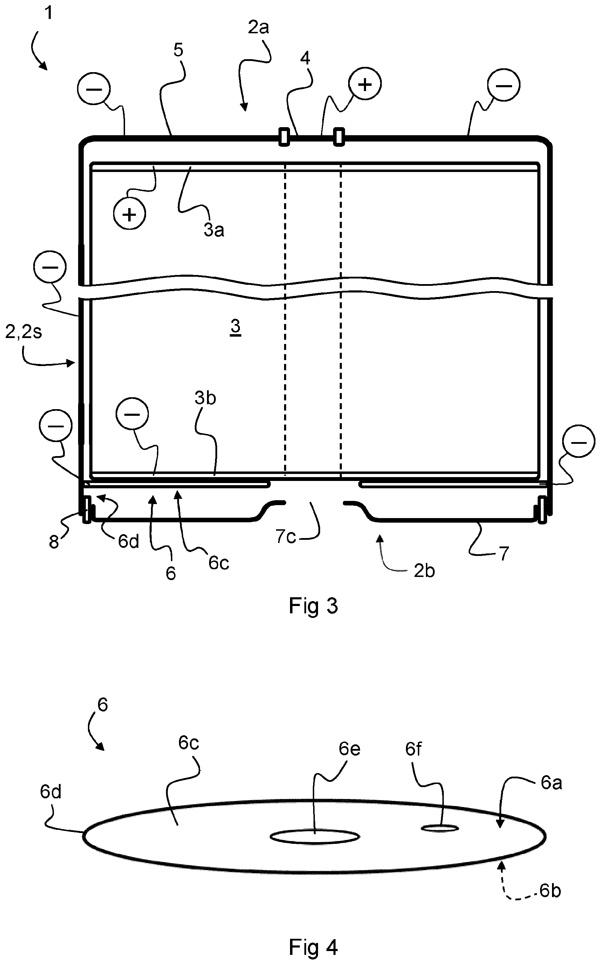

Figures 3 and 4 illustrate a second embodiment of the cell 1, which differs from the first embodiment of figures 1 and 2 in that the electrode lead plate lacks the flange. Thus, in the second embodiment the electrode lead plate is a disc. The cell 1 of the second embodiment may be especially low-cost in manufacture as the electrode lead plate 6 is of a simple design. Further, the electrode lead plate 6 of the second embodiment occupies very little room within the cell 1.

The electrode lead plate 6 of the second embodiment may be attached to the longitudinal side wall 2s of the cylindrical enclosure 2 by plastic deformation of the cylindrical enclosure and/or by welding, for example by ultrasonic torsional welding. Welding, in both embodiments, may be done from either the inside of the cylindrical enclosure or the outside.

In the embodiments described herein, the second enclosure end 2b is closed by a lid 7. The first enclosure end 2a is schematically illustrated as being closed by a top wall of the cylindrical enclosure 2. It is to understood that the first enclosure end may in alternative be closed by a first enclosure end lid (not shown). The first enclosure end 2a comprises a first terminal 4 and a second terminal 5. The two terminals are concentric, and the first terminal 4 is arranged within the second terminal 5. The second terminal 5 is formed by the first enclosure end 2a, but may in alternative be formed by a first enclosure end lid.

Figures 1 and 3 illustrate which parts of the cell 1 that are electrically connected to the anode and the cathode, respectively. See the encircled plus and minus signs. The second conductive sheet 3b of the electrode roll is furnished with a minus sign, and so is the electrode lead plate 6, the cylindrical enclosure 2 and the first enclosure end 2a (forming the negative terminal). The first conductive sheet 3a and the positive terminal 4 are furnished with plus signs. An electric insulator that encircles the positive terminal 4 is schematically illustrated. It should be noted that the cell can be designed with the opposite polarity. In other words, the jelly roll may be arranged in the cylindrical enclosure in the opposite way so that the terminal in the middle in the top of the cylindrical enclosure is a negative terminal. It is beneficial in such a case, to change material in the electrode lead plate 6.

Figure 5 shows, in cross-section, the electrolyte-filling end of a third embodiment of a cell 1. The embodiment of figure 5 is similar to the one of figure 1 and only differences will be discussed.

As was discussed above, the lid 7 may be attached to the cylindrical enclosure by crimping. Figure 5 shows an example of how the lid 7 is attached to the longitudinal side wall 2s of the cylindrical enclosure by crimping. As is illustrated, the lid flange portion 7d has the form of an upside down U. The lower end of the cylindrical enclosure 2 comprises a bulge 2c that receives the lid flange portion 7d. The bulge 2c protrudes radially from the cylindrical enclosure 2. The bottom portion of the lid 7 that forms the second enclosure end 2b protrudes axially from the lower end of the cylindrical enclosure 2.

No filling opening (7c in figure 1) is disclosed in figure 3, however there may be such an opening (as is illustrated in figures 6a to 6f).

Figures 6a to 6f show various embodiments of electrode lead plates. Figures 6a to 6f may show actual implementations, i.e. proportionally correct illustrations. The electrode lead plate 6 of figure 6a corresponds to the one of figures 1 and 2 but lacks distribution electrolyte holes 6f.

The electrolyte lead plate 6 of figure 6b corresponds to the one of figure 6a but comprises distribution electrolyte holes 6f distributed on the inner contact region 6c. The distribution electrolyte holes 6f of figure 6b are evenly distributed in a circular pattern along the outer edge of the inner contact region 6c. There are six distribution electrolyte holes 6f. A slit 6d, that extends through the flange-shaped outer contact region 6d and into the inner contact region 6c leads to each distribution electrolyte hole 6f.

The electrolyte lead plate 6 of figure 6c corresponds to the one of figure 6b but comprises an additional circle pattern of distribution electrolyte holes 6f.

The electrolyte lead plate 6 of figure 6d corresponds to the one of figure 6a but comprises distribution electrolyte holes 6f arranged in a pattern that has the form of a hexagram or six-pointed star.

The electrolyte lead plate 6 of figure 6e corresponds to the one of figure 6d but comprises an outer contact region 6d formed by a flange portion that does not extend normal to the plane of the disc-shaped element (as is the case in e.g. figures 1 and 6d). Such a flange portion is also shown in figure 5. Rather, the flange portion of figures 6 and 6e is inclined with respect to the longitudinal direction of the cylindrical enclosure 2. The inclination may be approximately 3 to 7 degrees, and is in the present example 4 to 6 degrees.

The electrolyte lead plate 6 of figure 6f corresponds to the one of figure 6d but comprises a number of projections 6j evenly distributed along the flange-shaped outer contact region 6d. In this example, there are six projections 6j. The projections 6j may be beneficial when the electrolyte lead plate 6 is welded to the cylindrical enclosure 2. For example, spot welds may be arranged at the respective projection 6j. The projections 6j may be formed by the flange-shaped outer contact region 6d being bent to form a V with the acute angle pointing radially outwards. The projections 6j may have a shape that resembles teeth of a crown cap for a bottle. The electrolyte lead plate 6 of figure 6f may be referred to as crown-shaped.

The slits 6f of figures 6b and 6c may be beneficial when the electrolyte lead plate 6 is attached to the cylindrical enclosure 2 by deformation of the cylindrical enclosure 2, or by deformation of the cylindrical enclosure 2 and the electrode lead plate 6. Such deformation of the cylindrical enclosure 2 typically involves reducing the diameter of the cylindrical enclosure 2 to attach the electrode lead plate 6 inside the cylindrical enclosure 2. In the electrode lead plate 6 is deformed, i.e. its diameter reduced, by the interaction with the cylindrical enclosure 2 then the slits 6f may reduce the risk of the electrode lead plate 6 buckling. The projections 6j of figure 6f may also hinder buckling.

The slits 6f may for example be cut out of the electrode lead plate. If the flange is made in a stamping process, the slits may be made before the stamping or in the same process.

The slits 6f are formed in the flange portion and extend into the electrode lead plate from the edge and inwards. The slits may extends into the electrode lead plate between 1 and 20 mm, preferably between 1 and 10 mm. Each slit may have a width of between 0.5 and 4 mm, and preferably between 0.5 and 2 mm. As an example, the slits extend 5 mm into the disc, directed towards its center, and has a width of 1 mm.

Figure 7 shows the electrode lead plate 6 of figures 4 and 6a but with a pattern of distribution electrolyte holes 6f. Figure 7 illustrates a first set of weld lines 6h and also indicates that the distribution electrolyte holes 6f may be arranged in a pattern that has the form of a six-pointed star (as is also the case in figures 6c, 6d, 6e, 6f). A six-pointed star pattern may also be referred to as a pattern including an inner hexagonal pattern of electrolyte flow holes and an including an outer hexagonal pattern of electrolyte flow holes, the inner and outer patterns being rotated approximately 30 degrees with respect to one another.

The distribution electrolyte holes 6f may be arranged in a pattern on the electrode lead plate 6 that allows welding the electrode lead plate 6 to the conductive sheet 3a of the electrode roll by a plurality of non-intersecting straight weld lines 6h. A first set of such weld lines, consisting of six weld lines, is illustrated in figures 7 and 9.

In figure 7, the distribution electrolyte holes 6f may be seen as assigned to five separate electrolyte flow hole groups. One straight weld line 6h extends across the electrode lead plate 6 between each electrolyte flow hole group. In detail, with reference to the orientation of figure 7, the top distribution electrolyte hole 6f belongs to a first electrolyte flow hole group. The distribution electrolyte holes 6f that are arranged essentially on the same height of the electrode lead plate 6 belong to a second electrolyte flow hole group. The two distribution electrolyte holes 6f that are arranged left and right of the inner contact region 6c belong to a third electrolyte flow hole group. The fourth electrode flow hole group corresponds to the second electrolyte flow hole group and finally the bottom distribution electrolyte hole 6f belongs to a fifth electrolyte flow hole group.

The central electrolyte hole 6e, if present, may be seen as part of the third electrolyte flow hole group.

Figure 8 illustrates a second set of weld lines 6i that is identical to the first set of weld lines 6h but arranged at an angle α of approximately 60 degrees with respect to the first set of weld lines 6h but. As is apprehended from figure 8, it is further possible to apply a third set of weld lines (not shown) that are arranged at an angle of approximately 60 degrees with respect to the second set of weld lines 6i.

In the embodiments of the electrode lead plate 6 that comprises distribution electrolyte holes 6f, the distribution electrolyte holes 6f may be arranged in a pattern that has the form of a hexagram or six-pointed star. In other words, if the twelve distribution electrolyte holes 6f are joined by imaginary straight lines drawn from each adjacent distribution electrolyte holes 6f to the next along the circumference of the electrode lead plate 6, a six-pointed star if formed. Such a pattern may provide evenly positioned distribution electrolyte holes 6f which is beneficial for the electrolyte distribution, and also leave room for uninterrupted weld lines drawn straight and evenly distanced across the electrode lead plate.

The distribution electrolyte holes 6f may be arranged in alternative patterns on the electrode lead plate, which patterns allows welding the electrode lead plate to the conductive sheet by a plurality of non-intersecting straight weld lines that extend across the electrode lead plate.

Alternative patterns may involve the distribution electrolyte holes 6f being arranged in an inner square pattern and an outer square pattern. The inner and outer square patterns being rotated approximately 45 degrees with respect to one another. Such a pattern in shown in figure 9. In another example (not shown) the distribution electrolyte holes are arranged in an inner pentagonal pattern and an outer pentagonal pattern. Thus, in view of the examples discussed herein, there may be zero, six eight or ten distribution electrolyte holes 6f.

Upon manufacture of a cylindrical secondary cell in which an electrode lead plate is in direct electrical contact with a conductive sheet of an electrode roll and with a cylindrical enclosure, the electrode lead plate may be arranged in direct electrical contact with the conductive sheet and with the cylindrical enclosure. For example, the electrode lead plate may be welded to the conductive sheet. The electrode lead plate may be attached to the cylindrical enclosure by deformation of the cylindrical enclosure, or by deformation of the cylindrical enclosure and the electrode lead plate (figure 5). Such a method is applicable to the above-described cylindrical secondary cells 1.

Modifications and other variants of the described embodiments will come to mind to ones skilled in the art having benefit of the teachings presented in the foregoing description and associated drawings. Therefore, it is to be understood that the embodiments are not limited to the specific example embodiments described in this disclosure and that modifications and other variants are intended to be included within the scope of this disclosure.

For example, the cylindrical secondary cell is shown as being circular cylindrical. However, other cross-sections, such as a rounded square or a rounded rectangular cross-section, are also conceivable. Furthermore, the anode and the cathode may switch place.

Furthermore, although specific terms may be employed herein, they are used in a generic and descriptive sense only and not for purposes of limitation. Therefore, persons skilled in the art would recognize numerous variations to the described embodiments that would still fall within the scope of the appended claims. As used herein, the terms "comprise/comprises" or "include/includes" do not exclude the presence of other elements or steps. Furthermore, although individual features may be included in different claims (or embodiments), these may possibly advantageously be combined, and the inclusion of different claims (or embodiments) does not imply that a certain combination of features is not feasible and/or advantageous. In addition, singular references do not exclude a plurality. Finally, reference numerals in the claims are provided merely as a clarifying example and should not be construed as limiting the scope of the claims in any way.

## Claims

1. A cylindrical secondary cell (1), comprising
- a cylindrical enclosure (2) comprising a first enclosure end (2a) and a second enclosure end (2b),
- an electrode roll (3) comprising first and second conductive sheets (3a, 3b) comprising electrode coatings, the electrode roll (3) being arranged in the cylindrical enclosure (2),
- a first terminal (4) arranged on the first enclosure end (2a) and electrically connected to the first conductive sheet (3a), and
- a second terminal (5) arranged on the first enclosure end (2a) and electrically connected to the second conductive sheet (3b) via the cylindrical enclosure (2),
wherein the cylindrical secondary cell (1) further comprises
- an electrode lead plate (6) that is in direct electrical contact with the second conductive sheet (3b) and in direct electrical contact with the cylindrical enclosure (2).

2. The cylindrical secondary cell (1) of claim 1, wherein the electrode lead plate (6) is attached to the second conductive sheet (3b) and/or to the cylindrical enclosure (2).

3. The cylindrical secondary cell (1) of claim 1 or 2, wherein the electrode lead plate (6) is welded to the second conductive sheet (3b) and/or to the cylindrical enclosure (2).

4. The cylindrical secondary cell (1) of any preceding claim, wherein the electrode lead plate (6) comprises an inner contact region (6c) that is in direct electrical contact with the second conductive sheet (3b) and an outer contact region (6d) that is in direct electrical contact with the cylindrical enclosure (2).

5. The cylindrical secondary cell (1) of any preceding claim, wherein the second enclosure end (2b) comprises a filling opening (7c) for filling the cylindrical enclosure (2) with electrolyte.

6. The cylindrical secondary cell (1) of any preceding claim comprising a lid (7) sealing the second enclosure end (2b).

7. The cylindrical secondary cell (1) of claim 6, wherein the lid (7) is electrically insulated from the second enclosure end (2b).

8. The cylindrical secondary cell (1) of claim 7, wherein the lid (7) is electrically insulated from the electrode lead plate (6).

9. The cylindrical secondary cell (1) of claim 7 or 8, wherein the lid (7) is electrically insulated from the cylindrical enclosure (2).

10. The cylindrical secondary cell (1) of claim 9 comprising a gasket (8) arranged between the lid (7) and the cylindrical enclosure (2).

11. The cylindrical secondary cell (1) of any preceding claim, wherein the electrode lead plate (6) consists of a disc-shaped element having a first end surface (6a) forming the inner contact region (6c) and a circumference forming the outer contact region (6d).

12. The cylindrical secondary cell (1) of claim 11, wherein the disc-shaped element comprises a flange portion forming the outer contact region (6d).

13. A method of manufacturing a cylindrical secondary cell (1), the cylindrical secondary cell (2) comprising
a cylindrical enclosure (2) comprising a first enclosure end (2a) provided with first and second terminals (4, 5) and a second enclosure end (2b),
an electrode roll (3) comprising a conductive sheet (3b) and
an electrode lead plate (6),
wherein the method comprises
- arranging the electrode lead plate (6) in direct electrical contact with the conductive sheet (3b) and with the cylindrical enclosure (2).

14. The method of claim 13, comprising welding the electrode lead plate (6) to the conductive sheet (3b) and/or welding the electrode lead plate (6) to the cylindrical enclosure (2).

15. An electrode lead plate (6) for a cylindrical secondary cell (1) comprising
a cylindrical enclosure (2) comprising a first enclosure end (2a) provided with first and second terminals (4, 5) and a second enclosure end (2b), and
an electrode roll (3) comprising a conductive sheet (3b) and arranged in the cylindrical enclosure (2),
wherein the electrode lead plate (6) comprises
- an inner contact region (6c) configured to be arranged in direct electrical contact with the conductive sheet (3b) and
- an outer contact region (6d) in the form of a flange portion configured to be arranged in direct electrical contact with the cylindrical enclosure (2).
